# FASCICULE DE BREVET EUROPEEN

(11) **EP 3 395 541 B1**
(45) Date de publication et mention de la délivrance du brevet: **01.06.2022**
(21) Numéro de dépôt: 18169086.8
(22) Date de dépôt: 24.04.2018
(51) Int. Cl.: B28B 7/00, B28B 7/18, B28B 7/34, B29C 64/106, B33Y 10/00

(54) **PROCEDE DE FABRICATION D'AU MOINS UNE PAROI D'UN ELEMENT DE CONSTRUCTION PREFABRIQUE A PAREMENT MATRICE**
HERSTELLUNGSVERFAHREN MINDESTENS EINER WAND EINES FERTIGBAUELEMENTS MIT VERKLEIDUNGSANORDNUNG
METHOD FOR MANUFACTURING AT LEAST ONE WALL OF A PREFABRICATED CONSTRUCTION ELEMENT WITH MATRIX FACING

(30) Priorité: 25.04.2017 FR 1753579
(43) Date de publication de la demande: 31.10.2018
(73) Titulaire: SPURGIN LEONHART (SAS), 67600 Selestat (FR)
(72) Inventeur: BOLLARD, Pierre, 74410 Saint Jorioz (FR); LENGES, Marc, 67750 Scherwiller (FR)
(74) Mandataire: Cabinet Nuss

(56) Documents cités:
- WO-A2-2008/141644
- US-A1- 2006 003 144
- US-A1- 2015 360 389
- US-A1- 2016 001 461
- ANONYMUS: "Neuentwicklungen in der Magnetschaltungstechnik", BFT INTERNATIONAL,, vol. 82, no. 9, 1 September 2016 (2016-09-01), pages 20-21, XP001597883,
- Weckenmann: "Shuttering profiles magnet technology accessories constructing the future", , 1 October 2014 (2014-10-01), page 36, XP055288454, Retrieved from the Internet: URL:http://www.weckenmann.com/media/7189/F ormwork profiles catalogue_10_2014_en.pdf [retrieved on 2016-07-14]
- "Intelligent adapters for efficient handling in precast plants", BFT INTERNATIONAL, , vol. 81, no. 6 1 June 2015 (2015-06-01), pages 44-45, XP001596500, Retrieved from the Internet: URL:www.bft-international.com

## Description

La présente invention concerne le domaine de la fabrication d'au moins une paroi d'un élément de construction préfabriqué à parement matricé, en particulier un procédé pour la fabrication d'au moins une paroi d'un élément de construction préfabriqué à parement matricé.

La construction de bâtiments, tels que des logements, des bureaux ou des locaux tertiaires, se fait généralement à partir d'éléments de construction préfabriqués, par exemple en béton armé ou fibré, qui sont érigés à la verticale pour former des voiles de ce bâtiment. Ces éléments de construction sont érigés en façade ou non de ce bâtiment, et peuvent présenter une fonction mécanique ou non, selon qu'ils supportent ou non les descentes de charges jusqu'aux fondations du bâtiment.

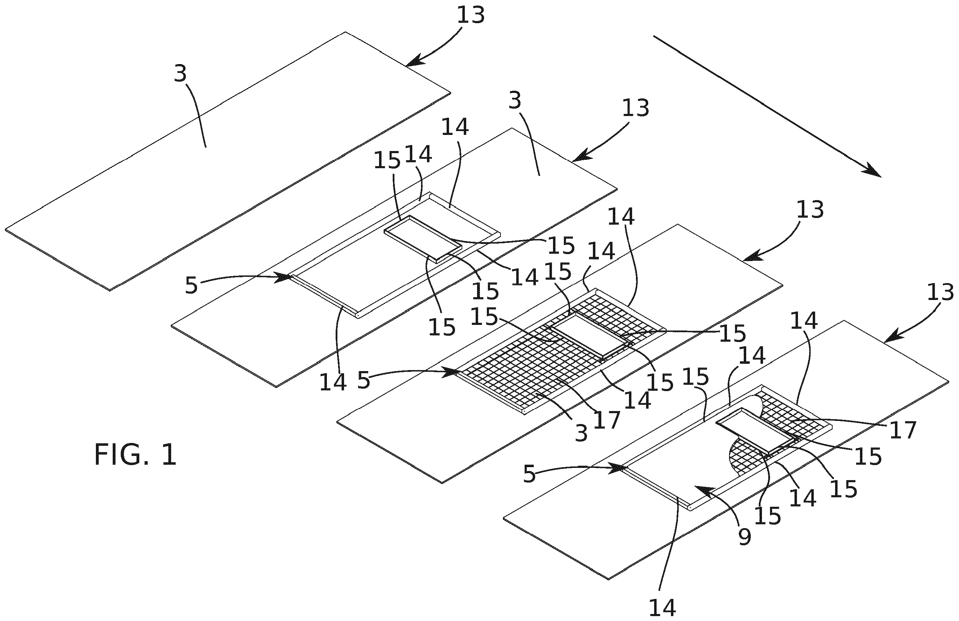

Un procédé de fabrication d'au moins une paroi d'un élément de construction préfabriqué, tel qu'illustré à la figure 1 peut comprendre une étape de coffrage, lors de laquelle des règles de coffrage métalliques et aimantées 14 sont aimantées à la surface 3 d'une table de coffrage 13 métallique à l'aide d'un robot de pose pour former un moule de coffrage 5. Ces règles de coffrage métalliques et aimantées 14 délimitent le contour de la paroi de l'élément de construction préfabriqué, qui présente généralement une forme proche du rectangle. Parfois, des règles de coffrage en bois 15 délimitant des portes ou fenêtres sont ajoutées. Elles sont plaquées contre la table de coffrage 13 et maintenues par collage. Puis, des inserts et des armatures 17 en acier sont mis en place. Un matériau hydraulique 9, tel que du béton, est ensuite coulé au contact de la surface 3 de la table de coffrage 13, dans le moule de coffrage 5 délimité par les règles de coffrage métalliques et aimantées 14, et éventuellement par les règles de coffrage en bois 15 plaqués contre la table de coffrage 13, noyant au passage les armatures 17. La paroi obtenue est ensuite étuvée afin d'accélérer la prise du béton puis est décoffrée et envoyée sur chantier. La table de coffrage 13 et les règles de coffrage métalliques et aimantées 14 sont désolidarisées, nettoyées, de façon automatisée, et réutilisées dans un cycle suivant.

Le cas échéant, une fonction esthétique est ajoutée à cette paroi d'élément de construction préfabriqué, notamment si cette paroi est par la suite située en façade de bâtiment. Pour ce faire, il est connu d'intégrer à cette paroi d'élément de construction un parement matricé lors de la fabrication. Selon un procédé de fabrication d'une telle paroi d'élément de construction préfabriqué à parement matricé, il est connu de mettre en place en fond de moule de coffrage un matériau présentant un relief positif, appelé matrice au contact duquel est coulé du béton. Après décoffrage, la paroi de l'élément de construction préfabriqué intègre un relief identique mais en négatif de celui de la matrice.

Plus particulièrement, une matrice est mise en place en fond de coffrage, sur tout ou partie de la table de coffrage métallique. La matière qui constitue la matrice est un caoutchouc, qui a lui-même été coulé au contact d'un moule. Cette pièce est coûteuse. Elle doit être collée sur toute sa surface en fond de table de coffrage pour ne pas glisser lors des phases de bétonnage et de secouage du béton, qui induisent des efforts horizontaux important et qui risqueraient de déplacer la matrice par rapport à la table de coffrage si elles n'étaient pas collées ensemble.

La table de coffrage métallique avec la matrice est utilisable uniquement dans le cas où un chantier présentant la matrice collée est en cours de production.

En effet, une fois la matrice en place, les règles de coffrage, délimitant le contour sensiblement rectangulaire de la paroi, sont mis en place. Mais ces règles de coffrage ne peuvent pas être aimantées, puisque la matrice empêche le contact et l'attraction entre aimant et métal. Des règles de coffrage en bois sont donc mises en place manuellement. Une fois les règles de coffrage en bois mises en place, celles-ci sont plaquées sur l'arase supérieure du relief de la matrice. Il existe donc un vide de hauteur et profil variable selon la matrice choisie, à combler au droit de la règle de coffrage. Ce vide est généralement comblé avec du plâtre, ce qui nécessite un travail rapide du fait du temps de prise du plâtre et soigné car un résultat esthétique est attendu. Le mode de travail est le même pour les coffrages bois type porte ou fenêtre évoquée ci-avant. Durant toute cette phase, la table de coffrage est immobilisée et génère un coût de main d'œuvre sans commune mesure avec celui d'une table de coffrage non matricée. Ce travail étant particulièrement long, lorsqu'un chantier matricé est produit, la cadence de production des parois à parement matricé est limitée à une table par jour, compte tenu de la main d'œuvre à disposition de façon quotidienne, et la cadence globale de l'usine sur les tables « lisses » est réduite.

Puis, des inserts et armatures en acier sont mis en place. Le béton est ensuite coulé au contact de la surface de la table de coffrage, dans le moule de coffrage délimité par les règles métalliques et aimantées, et éventuellement par les règles de coffrages en bois plaquées contre table de coffrage, noyant au passage les armatures. La paroi obtenue est étuvée afin d'accélérer la prise du béton puis est décoffrée et envoyée sur chantier. La table de coffrage équipée de la matrice est soigneusement nettoyée manuellement, afin de permettre son réemploi. Les règles de coffrage en bois enduites de plâtre sont jetées car non réutilisables. La table de coffrage avec matrice n'étant utilisable que lorsqu'un chantier comportant cette matrice est en cours de production, celle-ci est généralement mise en attente pendant plusieurs semaines, voire plusieurs mois, avant un réemploi. Cela réduit d'autant la capacité de production globale de l'usine, puisqu'une table de coffrage et une place dans l'étuve sont monopolisées sans production associée.

Enfin, la désolidarisation d'une matrice de sa table de coffrage est fastidieuse et coûteuse. La matrice est alors perdue, et la table de coffrage doit être entièrement poncée et retraitée en surface.

En résumé, cette façon de procéder présente un coût d'installation et de désinstallation élevé et présente l'inconvénient de monopoliser une table de coffrage qui risque en plus de ne pas pouvoir être réutilisable. Par ailleurs, l'étape d'installation de coffrage est particulièrement longue, fastidieuse et coûteuse. De plus de nombreux déchets sont générés. Enfin la cadence de production est faible et affecte la cadence globale de l'usine.

Le document US 2016/001461 A1 divulgue déjà un procédé de fabrication selon le préambule de la revendication 1.

La présente invention a pour but de proposer une solution modifiant très peu le mode de production habituelle d'une paroi d'un élément de construction préfabriqué et permettant d'éviter des étapes fastidieuses supplémentaires pour surmonter au moins les limitations principales de l'état de la technique indiquées ci-dessus.

La présente invention concerne un procédé de fabrication d'au moins une paroi d'un élément de construction préfabriqué à parement matricé, selon la revendication 1, et caractérisé en ce qu'il comprend au moins les étapes suivantes :
- une étape d'impression, lors de laquelle une substance est déposée au moins sur une fraction de la surface d'un fond d'un moule de coffrage par une unité d'impression pour former au moins un motif en relief d'au moins une matrice,
- une étape de coulage d'un matériau hydraulique, ultérieure à l'étape d'impression, lors de laquelle un matériau hydraulique est coulé au contact de la matrice pour former la paroi de l'élément de construction comprenant au moins un parement matricé formé par au moins un motif en relief en négatif du motif en relief de la matrice.

La présente divulgation concerne également une installation pour la fabrication d'au moins une paroi d'un élément de construction à parement matricé comprenant au moins un moule de coffrage pour former au moins la paroi de l'élément de construction,
installation caractérisée en ce qu'elle comprend :
une unité d'impression apte et destinée à déposer une substance au moins sur une fraction de la surface d'un fond du moule de coffrage pour former au moins un motif en relief d'au moins une matrice.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
la figure 2 est une vue en perspective illustrant les différentes étapes du procédé de fabrication d'une paroi d'un élément de construction à parement matricé dans une première variante de réalisation selon l'invention,
la figure 3 est une vue en perspective d'une installation pour la fabrication d'une paroi d'un élément de construction à parement matricé,
la figure 4 est une vue en perspective illustrant les différentes étapes du procédé de fabrication d'une paroi d'un élément de construction à parement matricé dans une deuxième variante de réalisation selon l'invention, et
la figure 5 est une vue en perspective d'un élément de construction à parement matricé comprenant une paroi obtenue par le procédé de fabrication selon l'invention.

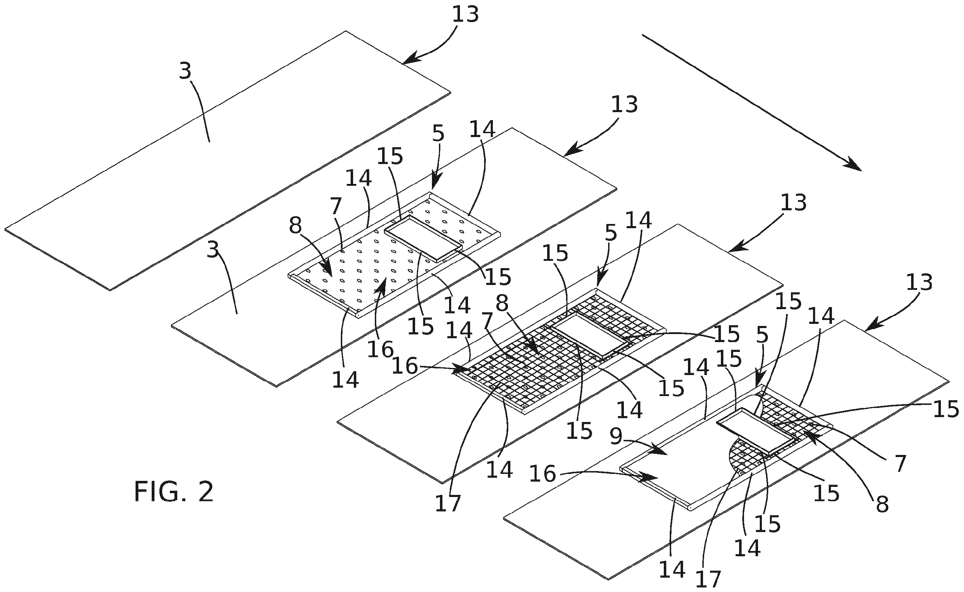

Conformément à l'invention et en référence aux figures 2 à 5, le procédé de fabrication d'au moins une paroi 10 d'un élément de construction 1 préfabriqué à parement matricé 2 est caractérisé en ce qu'il comprend au moins les étapes suivantes :
- une étape d'impression, lors de laquelle une substance (non représentée) est déposée au moins sur une fraction de la surface d'un fond d'un moule de coffrage 5 par une unité d'impression 6 pour former au moins un motif en relief 7 d'au moins une matrice 8,
- une étape de coulage d'un matériau hydraulique 9, ultérieure à l'étape d'impression, lors de laquelle un matériau hydraulique 9 est coulé au contact de la matrice 8 pour former la paroi 10 de l'élément de construction 1 comprenant au moins un parement matricé 2 formé par au moins un motif en relief en négatif 11 du motif en relief 7 de la matrice 8.

Avantageusement, la matrice 8 est réalisée lors du procédé de fabrication de la paroi 10 de l'élément de construction 1, à l'issue de l'étape d'impression et peut être adaptée, ou modifiée en fonction de la dimension de la paroi 10 souhaitée et en fonction du type de motif en relief en négatif 11 souhaité. La matrice 8 peut donc être différente d'un cycle de production à l'autre, d'un moule de coffrage 5 à l'autre. On évite également une étape fastidieuse d'installation et de fixation d'une matrice, comme c'est le cas dans l'art antérieur. Il est également possible de former différents types de motifs en relief en négatif 11 de la paroi 10 en faisant varier la forme de la substance créant le motif en relief 7 au cours de l'étape d'impression. Il en résulte qu'il est possible de fabriquer des éléments de construction 1 préfabriqués à parement matricé 2 ayant des motifs en relief en négatif 11 très diversifiés et à la demande, sans difficultés de mise en œuvre, à partir de telles parois 10 obtenues par le procédé selon l'invention.

La matrice 8 qui est obtenue à l'issue de l'étape d'impression peut comprendre un ou plusieurs motifs en relief 7.

La forme du motif en relief en négatif 11 de la paroi 10 correspond à la forme en négatif du motif en relief 7.

Le motif en relief en négatif 11 de la paroi 10 peut être par exemples : des nervures, des cannelures, un effet et/ou une texture : pierre et/ou galet et/ou bois et/ou brique et/ou enduit et/ou sablé et/ou grainé, et/ou bambou et/ou des figures abstraites, et/ou du texte et/ou un logo et/ou une image.

On entend par élément de construction 1 préfabriqué, un élément fabriqué en usine et destiné à être transporté vers un chantier et érigé sur ce chantier. De préférence, l'élément de construction 1 préfabriqué est apte et destiné à être disposé à la verticale, par exemple s'il s'agit d'un mur ou à l'horizontale, s'il s'agit d'une dalle.

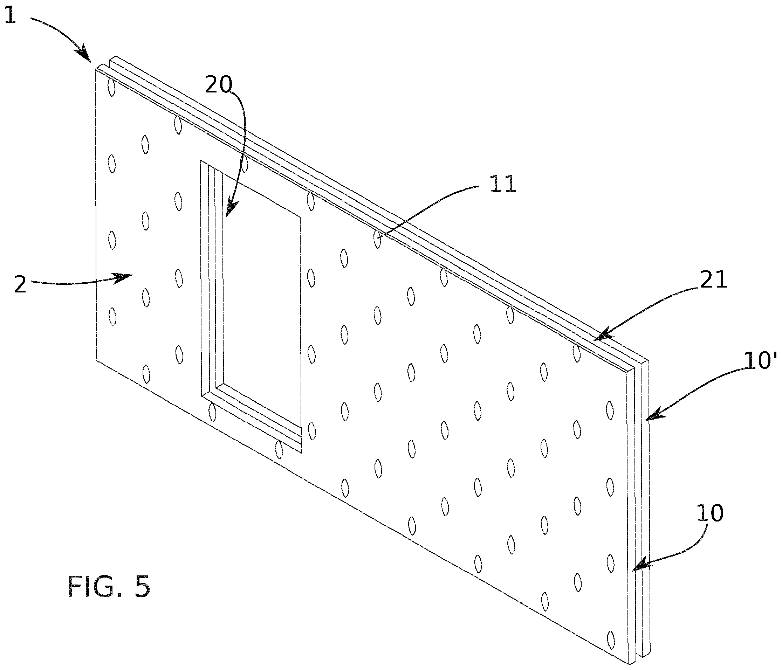

L'élément de construction 1 préfabriqué peut être un mur à coffrage intégré (figure 5) ou un mur à coffrage et isolation intégrés (non représenté) ou aussi un mur plein (non représenté) ou une dalle (non représentée) ou un panneau sandwich (non représenté) et comprendre une ou plusieurs parois 10, 10' (figure 5).

Le matériau hydraulique 9 peut être choisi parmi du béton fibré ou non, du béton fibré ultra haute performance, du composite ciment verre.

Lors de l'étape d'impression, l'unité d'impression 6 utilisée peut être une imprimante tridimensionnelle.

L'unité d'impression 6 peut comprendre au moins une tête d'impression 12 montée sur des moyens de déplacement 18 et lors de l'étape d'impression, la tête d'impression 12 peut être déplacée relativement au moule de coffrage 5 par les moyens de déplacement 18 et la tête d'impression 12 peut déposer la substance.

Une configuration inverse peut également être possible.

Lors de l'étape d'impression, la substance déposée peut être choisie seule ou en combinaison parmi une matière plastique, une cire, une résine, de l'argile, du néoprène ou similaire.

Plus particulièrement, la tête d'impression 12 peut balayer au moins une fraction de la surface du fond du moule de coffrage 5 pour la recouvrir en tout ou partie de la substance.

Selon une première variante de réalisation de l'invention illustrée à la figure 2, le moule de coffrage 5 comprend une table de coffrage 13 et une pluralité de règles de coffrage 14, 15 et le procédé comprend une étape d'installation de coffrage, préalable à l'étape d'impression, lors de laquelle la pluralité de règles de coffrage 14, 15 est fixée à la surface 3 de la table de coffrage 13 pour délimiter au moins une zone d'impression et/ou de coffrage 16.

Ces règles de coffrage 14, 15 délimitent le contour d'une zone d'impression et de coffrage 16. Par ailleurs, l'étape d'installation de coffrage est facile et rapide à mettre en œuvre, puisqu'elle a lieu avant l'impression de la matrice 8 à la surface 3 de la table de coffrage 13.

Dans ce cas, la surface du fond du moule de coffrage 5 correspond à au moins une portion de la surface 3 de la table de coffrage 13. La table de coffrage 13 peut sensiblement être contenue dans un plan.

Préférentiellement, la surface de la zone d'impression et/ou de coffrage 16 est contenue dans et inférieure à la surface 3 de la table de coffrage 13.

La pluralité de règles de coffrage comprend des règles de coffrage métalliques et aimantées 14 et la table de coffrage 13 est métallique et lors de l'étape d'installation de coffrage, la pluralité de règles de coffrage métalliques et aimantées 14 est aimantée à la table de coffrage 13.

Préférentiellement, les règles de coffrage 14, 15 peuvent être disposées sur la surface 3 de la table de coffrage 13 par un robot (non représenté), préférentiellement un bras robotisé.

En outre, la pluralité de règles de coffrage peut comprendre en plus des règles de coffrage métalliques et aimantées 14, des règles de coffrage en bois 15.

Selon la première variante de réalisation de l'invention illustrée à la figure 2, lors de l'étape d'impression, la substance est déposée à l'intérieur de la zone d'impression et de coffrage 16 par l'unité d'impression 6 pour former ledit au moins un motif en relief 7 de ladite au moins une matrice 8.

Avantageusement, selon cette première variante de réalisation de l'invention, la matrice 8 est réalisée lors du procédé de fabrication sur mesure dans la zone d'impression et de coffrage 16. La matrice 8 peut ainsi recouvrir une zone localisée de la surface 3 de la table de coffrage 13. Aucun vide de hauteur n'existe donc qui nécessiterait d'être comblé au droit des règles de coffrage 14, 15, par exemple, avec du plâtre. Une étape fastidieuse d'installation de coffrage après mise en place de la matrice est ainsi évitée. Par ailleurs, la matrice 8 est bloquée par les règles de coffrage 14, 15, de sorte qu'aucun collage de la matrice 8 contre la table de coffrage 13 n'est nécessaire. Il en résulte que la matrice 8 après l'étape d'impression ne risque pas de bouger lors de l'étape de coulage ou le cas échéant lors d'une étape de secouage, et que la table de coffrage 13 pourra aisément être réutilisée.

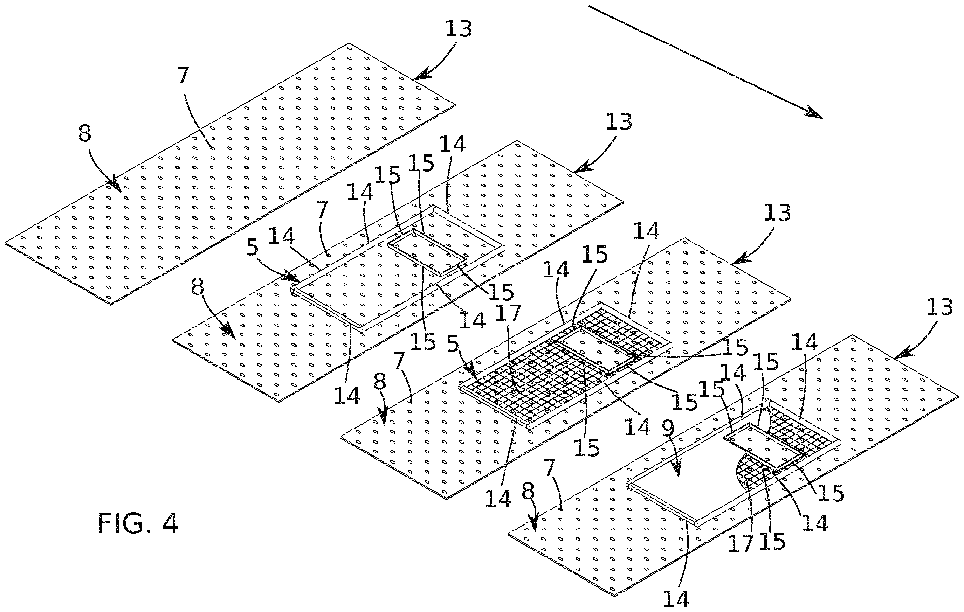

Selon une deuxième variante de réalisation de l'invention illustrée à la figure 4, lors de l'étape d'impression, la substance peut être déposée sur la totalité de la surface 3 de la table de coffrage 13 par l'unité d'impression 6 pour former ledit au moins un motif en relief 7 de ladite au moins une matrice 8.

Comme l'illustrent les figures 2 à 4, les règles de coffrage métalliques et aimantées 14 peuvent délimiter une première zone de forme rectangulaire qui correspond au pourtour extérieur de la paroi 10 qui sera obtenue à l'issue du procédé. D'autres règles de coffrage, préférentiellement en bois 15, peuvent délimiter une deuxième zone de forme rectangulaire qui est contenue à l'intérieur de la première zone de forme rectangulaire délimitée par les règles de coffrage 14 et qui correspond au pourtour d'une ouverture 20 dans la paroi 10 qui est destinée à recevoir un ouvrant, tel qu'une porte ou une fenêtre. Dans cette configuration, les première et deuxième zones délimitent la zone de coffrage et d'impression 16.

Dans tous les cas, le procédé peut comprendre une étape de lubrification, successive à l'étape d'impression et préalable à l'étape de coulage d'un matériau hydraulique 9, lors de laquelle une matière lubrifiante est déposée à la surface de la matrice 8.

Avantageusement, cette matière lubrifiante permet de faciliter une étape de décoffrage ultérieure de la paroi 10 obtenue à l'aide du procédé selon l'invention.

Préférentiellement, la matière lubrifiante peut consister en un corps gras à l'état solide ou liquide, par exemple du silicone, de l'huile ou similaire.

La matière lubrifiante peut être déposée par une unité de lubrification (non représentée).

Lorsque la matière lubrifiante est à l'état liquide, telle que de l'huile, celle-ci peut être pulvérisée à la surface de la matrice 8 obtenue après l'étape d'impression par un pulvérisateur (non représenté).

Le procédé peut comprendre une étape de ferraillage, ultérieure à l'étape d'impression, et le cas échéant à l'étape de lubrification, et préalable à l'étape de coulage d'un matériau hydraulique 9, lors de laquelle des armatures 17 sont disposées dans le moule de coffrage 5 et lors de l'étape de coulage d'un matériau hydraulique 9, les armatures 17 peuvent être noyées dans le matériau hydraulique 9.

Lors de l'étape ferraillage, les armatures 17 peuvent être disposées à l'intérieur de la zone d'impression et/ou de coffrage 16.

Lors de cette étape de ferraillage, des inserts (non représentés) peuvent également être disposés à l'intérieur de la zone d'impression et/ou de coffrage 16.

En réalité, lors de l'étape de coulage d'un matériau hydraulique, le matériau hydraulique 9 peut être coulé à l'intérieur de la zone d'impression et/ou de coffrage 16.

Le procédé peut comprendre une étape d'étuvage successive à l'étape de coulage de matériau hydraulique 9, lors de laquelle la paroi 10 est étuvée dans une étuve pour accélérer la prise du matériau hydraulique 9.

Le procédé peut comprendre une étape de décoffrage successive à l'étape d'étuvage, lors de laquelle la paroi 10 est décoffrée du moule de coffrage 5.

Le procédé peut comprendre une étape de nettoyage successive à l'étape de décoffrage, lors de laquelle les règles de coffrage métalliques et aimantées 14 et la matrice 8 sont désolidarisées de la table de coffrage 13 puis nettoyées. Cette étape de nettoyage peut être automatisée.

Avantageusement, les règles de coffrage métalliques et aimantées 14 peuvent être réutilisées.

Le procédé peut comprendre une étape de recyclage successive à l'étape de nettoyage, lors de laquelle la substance constitutive de la matrice 8 est refondue pour être recyclée.

Avantageusement, il en résulte que la table de coffrage 13 peut être réutilisée avec ou sans matrice 8 lors d'un prochain cycle. Les déchets sont avantageusement évités.

Comme l'illustre la figure 5, le procédé selon l'invention permet d'obtenir une paroi 10 d'un élément de construction 1 préfabriqué à parement matricé 2, qui comprend une pluralité de motifs en relief en négatif 11 du motif en relief 7 de la matrice 8. Dans le cas représenté à la figure 5, la paroi 10 peut comprendre une ouverture 20. Le procédé selon l'invention peut être intégré à un procédé de fabrication de l'élément de construction 1 préfabriqué. Par ailleurs, l'élément de construction 1 préfabriqué obtenu peut être un mur à coffrage intégré et peut comprendre la paroi 10 à parement matricé et une autre paroi 10', ces parois 10, 10' pouvant être sensiblement parallèles entre elles et pouvant être maintenues à distance l'une de l'autre pour former un espace 21 apte et destiné à être rempli par au moins un matériau hydraulique (figure 5).

Bien entendu cet exemple n'est pas limitatif et il est possible d'utiliser et/ d'intégrer ce procédé selon l'invention pour réaliser une paroi d'une dalle préfabriqué ou d'un panneau sandwich ou d'un mur à coffrage et isolation intégrés ou d'un mur plein à parement matricé 2.

L'installation pour la fabrication d'un élément de construction 1 à parement matricé 2 comprend au moins un moule de coffrage 5 pour former au moins une paroi 10 d'un élément de construction 1.

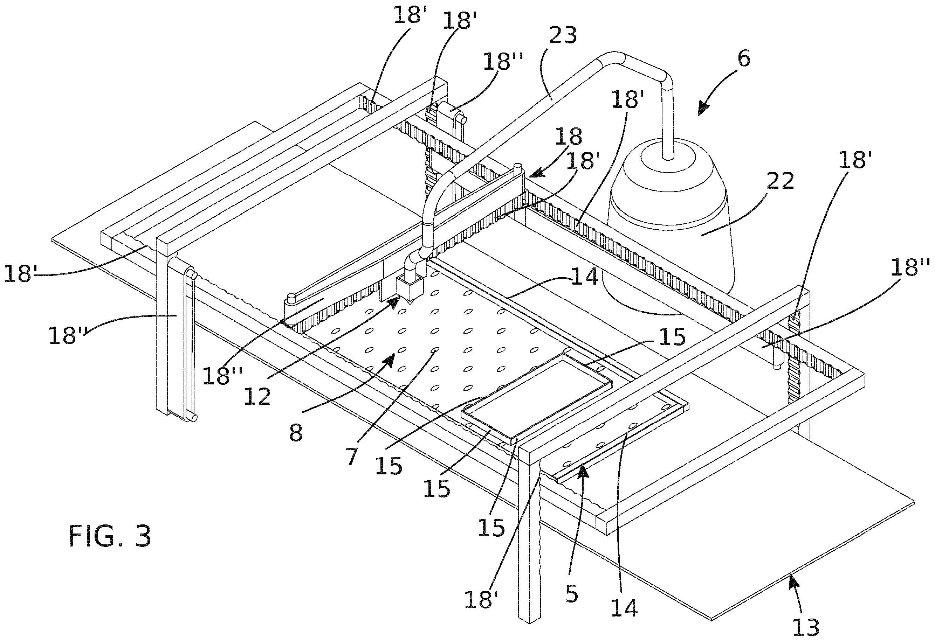

En référence à la figure 3, l'installation est caractérisée en ce qu'elle comprend :
une unité d'impression 6 apte et destinée à déposer une substance au moins sur une fraction de la surface d'un fond du moule de coffrage 5 pour former au moins un motif en relief 7 d'au moins une matrice 8.

Avantageusement, l'installation pour la fabrication d'un élément de construction 1 à parement matricé 2 est apte et destinée à la mise en œuvre du procédé de fabrication d'au moins une paroi 10 d'un élément de construction 1 préfabriqué à parement matricé 2, tel que décrit précédemment.

Plus particulièrement, le moule de coffrage 5 peut être tel que décrit précédemment.

L'unité d'impression 6 peut comprendre une imprimante tridimensionnelle. L'imprimante tridimensionnelle peut être de grand format et présenter une cadence, préférentiellement de l'ordre d'une heure. Le format couvert par l'imprimante tridimensionnelle est au moins d'une table de coffrage 13, soit préférentiellement 3,70 mètres de largeur et 13,00 mètres de longueur.

L'unité d'impression 6 peut comprendre au moins une tête d'impression 12 et des moyens de déplacement 18 mobiles relativement au moule de coffrage 5 sur lesquels la tête d'impression 12 est montée.

La tête d'impression 12 peut être équipée d'une résistance (non représentée) permettant de chauffer la substance à déposer sur la table de coffrage 13.

Plus particulièrement, l'unité d'impression 6 peut comprendre un réservoir 22 dans lequel la substance est stockée, ainsi que des moyens d'écoulement 23 reliés au réservoir 22 et à la tête d'impression 12 pour permettre l'écoulement de la substance du réservoir 22 vers la tête d'impression 12.

La tête d'impression 12 peut être préférentiellement déplacée dans trois dimensions de l'espace et notamment parallèlement et orthogonalement à la table de coffrage 13.

A cet effet, les moyens de déplacement 18 peuvent comprendre au moins trois axes 18' et des systèmes de courroies 18" permettant le déplacement de la tête d'impression 12 par rapport à la table de coffrage 13.

L'installation peut comprendre une unité de lubrification apte et destinée à déposer une matière lubrifiante. Cette unité de lubrification peut comprendre un pulvérisateur.

L'installation peut comprendre un pont roulant (non représenté) sur lequel est montée la table de coffrage 13 pour être déplacée d'une unité à l'autre.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention, limité par les revendications.

## Revendications

1. Procédé de fabrication d'au moins une paroi (10) d'un élément de construction (1) préfabriqué à parement matricé (2) comprenant au moins les étapes suivantes :
- une étape d'impression par une unité d'impression (6) pour former au moins un motif en relief (7) d'au moins une matrice (8),
- une étape de coulage d'un matériau hydraulique (9) ultérieure à l'étape d'impression, lors de laquelle un matériau hydraulique (9) est coulé au contact de la matrice (8) pour former la paroi (10) de l'élément de construction (1) comprenant au moins un parement matricé (2) formé par au moins un motif en relief en négatif (11) du motif en relief (7) de la matrice (8),
**caractérisé en ce que**, lors de l'étape d'impression, une substance est déposée au moins sur une fraction de la surface d'un fond d'un moule de coffrage (5), le moule de coffrage (5) comprenant une table de coffrage (13) métallique et une pluralité de règles de coffrage (14, 15), la pluralité de règles de coffrage comprenant des règles de coffrage métalliques et aimantées (14),
et **en ce que** le procédé comprend, en outre :
- une étape d'installation de coffrage, préalable à l'étape d'impression, lors de laquelle la pluralité de règles de coffrage (14, 15) est fixée et aimantée à la surface (3) de la table de coffrage (13) pour délimiter au moins une zone d'impression et de coffrage (16),
et **en ce que** lors de l'étape d'impression, la substance est déposée à l'intérieur de la zone d'impression et de coffrage (16) par l'unité d'impression (6) pour former ledit au moins un motif en relief (7) de ladite au moins une matrice (8).

2. Procédé selon la revendication 1, **caractérisé en ce que** lors de l'étape d'impression, l'unité d'impression (6) utilisée est une imprimante tridimensionnelle.

3. Procédé selon l'une quelconque des revendications 1 à 2, **caractérisé en ce que** l'unité d'impression (6) comprend au moins une tête d'impression (12) montée sur des moyens de déplacement (18) et **en ce que** lors de l'étape d'impression, la tête d'impression (12) est déplacée relativement au moule de coffrage (5) par les moyens de déplacement (18) et la tête d'impression (12) dépose la substance.

4. Procédé selon l'une quelconque des revendications 1 à 3, **caractérisé en ce que** lors de l'étape d'impression, la substance déposée est choisie seule ou en combinaison parmi une matière plastique, une cire, une résine, de l'argile, du néoprène.

5. Procédé selon l'une quelconque des revendications 1 à 4, **caractérisé en ce que** le procédé comprend une étape de lubrification, successive à l'étape d'impression et préalable à l'étape de coulage d'un matériau hydraulique (9), lors de laquelle une matière lubrifiante est déposée à la surface de la matrice (8).

6. Procédé selon l'une quelconque des revendications 1 à 5, **caractérisé en ce que** le procédé comprend une étape de ferraillage, ultérieure à l'étape d'impression, et le cas échéant à l'étape de lubrification, et préalable à l'étape de coulage d'un matériau hydraulique (9), lors de laquelle des armatures (17) sont disposées dans le moule de coffrage (5) et **en ce que** lors de l'étape de coulage d'un matériau hydraulique (9), les armatures (17) sont noyées dans le matériau hydraulique (9).

7. Procédé selon la revendication 6, **caractérisé en ce que** lors de l'étape ferraillage, les armatures (17) sont disposées à l'intérieur de la zone d'impression et de coffrage (16).

## Patentansprüche

1. Verfahren zum Herstellen mindestens einer Wand (10) eines Fertigbauelements (1) mit geprägter Sichtseite (2), umfassend mindestens die folgenden Schritte:
- einen Schritt des Druckens mit einer Druckeinheit (6), um mindestens ein Reliefmuster (7) mindestens einer Matrize (8) zu bilden,
- einen Schritt des Gießens eines hydraulischen Materials (9) nach dem Schritt des Druckens, bei dem ein hydraulisches Material (9) in Kontakt mit der Matrize (8) gegossen wird, um die Wand (10) des Fertigbauelements (1) zu bilden, die mindestens eine prägte Sichtseite (2) umfasst, die durch mindestens ein Reliefmuster als Negativ (11) des Reliefmusters (7) der Matrize (8) gebildet wird,
**dadurch gekennzeichnet, dass** beim Schritt des Druckens eine Substanz auf mindestens einem Teil der Oberfläche eines Bodens einer Schalungsform (5) abgesetzt wird, wobei die Schalungsform (5) eine metallische Schaltafel (13) und eine Mehrzahl von Schalprofilen (14, 15) umfasst, wobei die Mehrzahl von Schalprofilen metallische und magnetische (14) Schalprofile umfasst,
und **dadurch gekennzeichnet, dass** das Verfahren ferner umfasst:
- einen Schritt der Montage der Schalung, vor dem Schritt des Druckens, bei dem die Mehrzahl von Schalprofilen (14, 15) an der Oberfläche (3) der Schaltafel (13) magnetisch fixiert wird, um mindestens einen Druck- und Schalungsbereich (16) zu begrenzen,
und dass beim Schritt des Druckens die Substanz von der Druckeinheit (6) im Inneren des Druck- und Schalungsbereichs (16) abgesetzt wird, um das mindestens eine Reliefmuster (7) der mindestens einen Matrize (8) zu bilden.

2. Verfahren nach Anspruch 1, **dadurch gekennzeichnet, dass** beim Schritt des Druckens die verwendete Druckeinheit (6) ein 3D-Drucker ist.

3. Verfahren nach einem der Ansprüche 1 bis 2, **dadurch gekennzeichnet, dass** die Druckeinheit (6) mindestens einen Druckkopf (12) umfasst, der an Verlagerungsmitteln (18) angebracht ist, und dass beim Schritt des Druckens der Druckkopf (12) von den Verlagerungsmitteln (18) relativ zur Schalungsform (5) verlagert wird und der Druckkopf (12) die Substanz absetzt.

4. Verfahren nach einem der Ansprüche 1 bis 3, **dadurch gekennzeichnet, dass** beim Schritt des Druckens die abgesetzte Substanz allein ausgewählt wird oder unter einem Kunststoff, einem Wachs, einem Harz, Lehm, Neopren ausgewählt wird.

5. Verfahren nach einem der Ansprüche 1 bis 4, **dadurch gekennzeichnet, dass** das Verfahren einen Schritt des Schmierens im Anschluss an den Schritt des Druckens und vor dem Schritt des Gießens eines hydraulischen Materials (9) umfasst, bei dem ein Schmierstoff auf der Oberfläche der Matrize (8) abgesetzt wird.

6. Verfahren nach einem der Ansprüche 1 bis 5, **dadurch gekennzeichnet, dass** das Verfahren einen Schritt des Bewehrens nach dem Schritt des Druckens und gegebenenfalls dem Schritt des Schmierens und vor dem Schritt des Gießens eines hydraulischen Materials (9) umfasst, bei dem Armierungen (17) in der Schalungsform (5) angeordnet werden, und dass beim Schritt des Gießens eines hydraulischen Materials (9) die Armierungen (17) in das hydraulische Material (9) eingebettet werden.

7. Verfahren nach Anspruch 6, **dadurch gekennzeichnet, dass** beim Schritt des Bewehrens die Armierungen (17) im Inneren des Druck- und Schalungsbereichs (16) angeordnet werden.

## Claims

1. Method for manufacturing at least one wall (10) of a prefabricated construction element (1) with cast facing (2) comprising at least the following steps:
- a step of printing by a printing unit (6) to form at least one relief pattern (7) of at least one die (8),
- a step of pouring of a hydraulic material (9) following the printing step, during which a hydraulic material (9) is poured into contact with the die (8) to form the wall (10) of the construction element (1) comprising at least one cast facing (2) formed by at least one negative relief pattern (11) of the relief pattern (7) of the die (8),
**characterized in that**, during the printing step, a substance is deposited over at least a fraction of the surface of a bottom of a formwork mould (5), the formwork mould (5) comprising a metal formwork table (13) and a plurality of formwork rulers (14, 15), the plurality of formwork rulers comprising metallic and magnetized formwork rulers (14),
and **in that** the method further comprises:
- a step of formwork installation, prior to the printing step, during which the plurality of formwork rulers (14, 15) is fixed and magnetized on the surface (3) of the formwork table (13) to delimit at least one printing and formwork zone (16),
and **in that**, during the printing step, the substance is deposited inside the printing and formwork zone (16) by the printing unit (6) to form said at least one relief pattern (7) of said at least one die (8).

2. Method according to Claim 1, **characterized in that** during the printing step, the printing unit (6) used is a three-dimensional printer.

3. Method according to either one of Claims 1 and 2, **characterized in that** the printing unit (6) comprises at least one printing head (12) mounted on displacement means (18) and **in that**, during the printing step, the printing head (12) is displaced relative to the formwork mould (5) by the displacement means (18) and the printing head (12) deposits the substance.

4. Method according to any one of Claims 1 to 3, **characterized in that**, during the printing step, the substance deposited is chosen alone or in combination from among a plastic material, a wax, a resin, clay, neoprene.

5. Method according to any one of Claims 1 to 4, **characterized in that** the method comprises a lubrication step, following the printing step and prior to the step of pouring of a hydraulic material (9), during which a lubricating material is deposited on the surface of the die (8).

6. Method according to any one of Claims 1 to 5, **characterized in that** the method comprises a reinforcing step, following the printing step, and, if necessary, the lubrication step, and prior to the step of pouring of a hydraulic material (9), during which reinforcements (17) are disposed in the formwork mould (5) and **in that**, during the step of pouring of a hydraulic material (9), the reinforcements (17) are embedded in the hydraulic material (9).

7. Method according to Claim 6, **characterized in that**, during the reinforcing step, the reinforcements (17) are disposed inside the printing and formwork zone (16).
